(19) **Europäisches Patentamt**
**European Patent Office**
**Office européen des brevets**

(11) **EP 3 518 481 A1**

(12) **EUROPEAN PATENT APPLICATION**
published in accordance with Art. 153(4) EPC

(43) Date of publication:
**31.07.2019 Bulletin 2019/31**

(21) Application number: **16918776.2**

(22) Date of filing: **13.10.2016**

(51) Int Cl.:
**H04L 27/26** *(2006.01)* **H04L 27/01** *(2006.01)*

(86) International application number:
**PCT/JP2016/080446**

(87) International publication number:
**WO 2018/070030 (19.04.2018 Gazette 2018/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Mitsubishi Electric Corporation Chiyoda-ku Tokyo 100-8310 (JP)**

(72) Inventor: **HASEGAWA, Fumihiro Tokyo 100-8310 (JP)**

(74) Representative: **Pfenning, Meinig & Partner mbB Patent- und Rechtsanwälte Theresienhöhe 11a 80339 München (DE)**

(54) **RECEPTION DEVICE, COMMUNICATION DEVICE AND DEMODULATION METHOD**

(57) A reception device (2) to receive a block signal that is a signal having a construction in which a sequence of static symbols is added to a leading part and a trailing part of a sequence of data symbols, includes a transmission-path estimation unit (26) to calculate a transmission-path estimation value on the basis of static symbols included in the block signal, and a block signal demodulation unit (20) to demodulate the block signal on the basis of the transmission-path estimation value. The transmission-path estimation unit (26) calculates an initial value of the transmission-path estimation value on the basis of static symbols included in a first block signal to be demodulated, and recalculates a transmission-path estimation value on the basis of a result obtained by the block signal demodulation unit (20) demodulating data symbols included in the first block signal using the initial value and a result of demodulation of data symbols included in a second block signal having been received immediately-previously to the first block signal. The block signal demodulation unit (20) demodulates the first block signal again using the recalculated transmission-path estimation value.

FIG.4

EP 3 518 481 A1

**Description**

Field

The present invention relates to a reception device that receives a signal transmitted in block transmission, a communication device, and a demodulation method.

Background

In a digital communication system, multipath fading caused by a transmission signal reflected from buildings or the like or Doppler shift caused by movement of a terminal device causes frequency selective and time variability of a transmission path. In such a multipath environment, a received signal becomes a signal in which a transmitted symbol and a symbol that arrives after a lapse of a delay time interfere with each other.

For the frequency-selective transmission path as described above, a Single Carrier (SC) block transmission system intended for obtaining optimum reception characteristics has been recently drawing attention (see, for example, Non-patent Literature 1). The SC block transmission system can reduce a peak electric power as compared to an Orthogonal Frequency Division Multiplexing (OFDM) transmission system that belongs to Multiple Carrier (MC) block transmission (see, for example, Non-patent Literature 2).

For example, a transmitter that performs SC block transmission implements measures for multi fading by performing transmission in the manner as described below. First, a "Modulator" generates a Phase Shift Keying (PSK) signal or a Quadrature Amplitude Modulation (QAM) signal that is a digital modulation signal, and then a precoder and an Inverse Discrete Fourier Transform (IDFT) processing unit transform the digital modulation signal into a time-domain signal. Thereafter, a Cyclic Prefix (CP) insertion unit inserts a CP in the time-domain signal for the purpose of multipath fading compensation. The CP insertion unit copies a predetermined number of samples from a later part of the time-domain signal, and adds the copy to the beginning of a transmission signal. In general, a transmitter performing SC block transmission carries out Discrete Fourier Transform (DFT) processing in a precoder in order to minimize a transmission peak power.

In Non-patent Literatures 1 and 2, the transmission peak power is minimized while the influence of multipath fading is reduced. However, in the SC block transmission, since the phase and amplitude between SC blocks are discontinuous, an out-of-band spectrum or an out-of-band leakage power is caused. The out-of-band spectrum causes interference with adjacent channels. It is thus necessary to suppress the out-of-band spectrum. In a general communication system, a spectral mask is determined, and the out-of-band spectrum needs to be reduced so as to satisfy the spectral mask.

Non-patent Literature 3 proposes a technique to insert symbols consisting of a static sequence into both ends of a block to thereby suppress an out-of-band spectrum. A transmitter described in Non-patent Literature 3 generates a data symbol and a static-sequence symbol for each block, and multiplexes these symbols in a time domain. The data symbol is a symbol obtained in a modulation method such as PSK or QAM and is thus changed randomly. The transmitter transforms the multiplexed signal into a frequency-domain signal through the DFT processing, and then performs interpolation processing in a frequency domain, for example oversampling, on the frequency-domain signal to generate a time-domain signal through the IDFT processing. The number of inputs/outputs of a DFT unit is represented as $N_D$. The number of inputs of an interpolation processing unit is represented as $N_D$, while the number of outputs from the interpolation processing unit is represented as LN. The number of inputs/outputs of an IDFT unit is represented as LN. An oversampling rate for oversampling that is interpolation processing is represented as L. In the transmitter, when L=1, N-point IDFT processing is performed and $N \geq N_D$ holds. Where $N-N_D > 0$, the interpolation processing unit inserts a zero into an output of the DFT unit. For such a zero insertion method, for example, a method as described in Non-patent Literature 4 is used.

An output of the IDFT unit is referred to as "sample". The static-sequence symbols described above are constructed of M symbols, while an identical sequence is inserted into each of the all blocks at the same position thereof. Since the same sequence is generated for the static sequence symbols, any retained static-sequence symbols may be read out from a memory. While any processing can be used for the oversampling processing, zero padding or the like is used in general.

As described above, a block of $N_D$ symbols in which a data symbol and a static-sequence symbol have been multiplexed is inputted to the DFT unit. Because the number of static-sequence symbols is M, the number of data symbols is $N_D$-M. In Non-patent Literature 3, M static-sequence symbols are divided into halves, and for arrangement of static-sequence symbols within the block, M/2 symbols that are the second half of the static-sequence symbols are arranged in the leading part of the block before the ($N_D$-M) data symbols arranged at the center of the block, while M/2 symbols that are the first half of the static-sequence symbols are arranged in the trailing part of the block after the ($N_D$-M) data symbols. For example, the static-sequence symbols can be represented as $F_{-M/2}$, $F_{-M/2+1}$, $\cdots$, $F_{-1}$, $F_0$, $F_1$, $\cdots$, $F_{M/2-2}$,

$F_{M/2-1}$. When a transmitter generates a plurality of blocks, M/2 symbols $F_0$, $F_1$, $\cdots$, $F_{M/2-2}$, $F_{M/2-1}$ that are a second half of the static-sequence symbols arranged in the leading part of the block continue from M/2 symbols $F_{-M/2}$, $F_{-M/2+1}$, $\cdots$, $F_{-1}$ that are a first half of the static-sequence symbols arranged in the trailing part of the immediately-previous block. For example, where an m-th data symbol in a k-th block is represented as $d_{k,m}$, arrangement of data symbols and static-sequence symbols before being inputted to the DFT unit can be represented as $F_0$, $\cdots$, $F_{M/2-1}$, $d_{k,1}$, $\cdots$, $d_{k,ND-M}$, $F_{-M/2}$, $\cdots$, $F_{-1}$ (the subscript "ND" means "$N_D$") in order from the leading end of the block. Any sequence may be used for the static-sequence symbols, and specifically a Zadoff-Chu sequence, zeros, or other sequences can be used therefor.

In the manner as explained above, a block in which the static-sequence symbols described in Non-patent Literature 3 are arranged is inputted to the DFT unit, and thereby the phases are continued between the blocks in output of the IDFT unit so that the out-of-band spectrum can be suppressed. In the example described above, equal numbers of static-sequence symbols are arranged in the leading part and tailing part of a block, respectively. However, different numbers of static-sequence symbols may be arranged in the leading part and trailing part of a block.

Description is given for the principle of why waveform continuity is maintained by insertion of the static-sequence symbols explained above. Aliasing occurs in a block due to a combination of DFT processing, interpolation processing, and IDFT processing. In the aliasing caused by the above-mentioned processing combination, the waveform of each symbol is folded back to the opposite side of a block at the trailing end of the block. By taking advantages of such characteristics, static symbols are used at the beginning and ending of each block, thereby making it possible to smoothly continue the phases between blocks.

Citation List

Non Patent Literatures

Non-patent Literature 1: N. Benvenuto, R. Dinis, D. Falconer and S. Tomasin, "Single Carrier Modulation With Nonlinear Frequency Domain Equalization: An Idea Whose Time Has Come-Again", Proceeding of the IEEE, vol. 98, no. 1, Jan 2010, pp. 69-96.

Non-patent Literature 2: J. A. C. Bingham, "Multicarrier Modulation for Data Transmission: An Idea Whose Time Has Come", IEEE Commun. Mag., vol. 28, no. 5, May 1990, pp. 5-14.

Non-patent Literature 3: Hasegawa, et al., "Static Sequence Embedded DFT-s-OFDM", IEICE technical report, vol. 14, no. 490, RCS2014-326, pp. 147-152, March 2015.

Non-patent Literature 4: B. Porat, "A Course in Digital Signal Processing", John Wiley and Sons Inc., 1997.

Summary

Technical Problem

In the case of SC block transmission described in Non-patent Literature 3, a reception device is capable of estimating a transmission path using a static sequence inserted regularly in a received signal. However, in a multipath environment, there has been a problem in that the reception device receives a signal in which a data component is multiplexed with a static-sequence component, thereby leading to degradation of the accuracy in estimating a transmission path, which has been problematic.

The present invention has been made in view of the above circumstances, and an object of the present invention is to provide a reception device that is capable of improving the accuracy in estimating a transmission path.

Solution to Problem

In order to solve the above-mentioned problems and achieve the object, the present invention provides a reception device to receive a block signal from a transmission device that generates and transmits the block signal that is a signal having a construction in which a sequence of static symbols is added to a leading part and a trailing part of a sequence of data symbols. The reception device comprises: a transmission-path estimation unit to calculate a transmission-path estimation value on the basis of static symbols included in the block signal; and a block signal demodulation unit to demodulate the block signal on the basis of the transmission-path estimation value calculated by the transmission-path estimation unit. The transmission-path estimation unit calculates an initial value of the transmission-path estimation value on the basis of static symbols included in a first block signal that is a block signal to be demodulated, and recalculates a transmission-path estimation value on the basis of a result obtained by the block signal demodulation unit demodulating data symbols included in the first block signal using the initial value and a result of demodulation of data symbols included in a second block signal that is a block signal having been received immediately-previously to the first block signal, and when the transmission-path estimation unit recalculates a transmission-path estimation value, the block signal demodulation unit demodulates the first block signal again using the recalculated transmission-path estimation value.

Advantageous Effects of Invention

According to the present invention, there is an advantageous effect in that it is possible to improve the accuracy in estimating a transmission path.

Brief Description of Drawings

FIG. 1 is a diagram illustrating an example of a communication system configured to include a transmission device and a reception device according to a first embodiment.
FIG. 2 is a diagram illustrating a configuration example of the transmission device according to the first embodiment.
FIG. 3 is a diagram illustrating an example of a signal generated by a multiplexing unit of the transmission device according to the first embodiment.
FIG. 4 is a diagram illustrating a configuration example of the reception device according to the first embodiment.
FIG. 5 is a diagram illustrating a configuration example of a transmission-path estimation unit of the reception device according to the first embodiment.
FIG. 6 is a flowchart illustrating an example of an operation of the reception device according to the first embodiment.
FIG. 7 is a flowchart illustrating another example of an operation of the reception device according to the first embodiment.
FIG. 8 is a diagram illustrating an example of hardware that realizes constituent elements of the reception device according to the first embodiment.
FIG. 9 is a diagram illustrating another example of hardware that realizes constituent elements of the reception device according to the first embodiment.
FIG. 10 is a diagram illustrating a configuration example of a reception device according to a second embodiment.
FIG. 11 is a diagram illustrating a configuration example of a transmission-path estimation unit of the reception device according to the second embodiment.
FIG. 12 is a flowchart illustrating an example of an operation of the reception device according to the second embodiment.
FIG. 13 is a flowchart illustrating another example of an operation of the reception device according to the second embodiment.
FIG. 14 is a diagram illustrating a configuration example of a reception device according to a third embodiment.

Description of Embodiments

A reception device, a communication device, and a demodulation method according to embodiments of the present invention will be described in detail below with reference to the drawings. The present invention is not necessarily limited by these embodiments.

First embodiment.

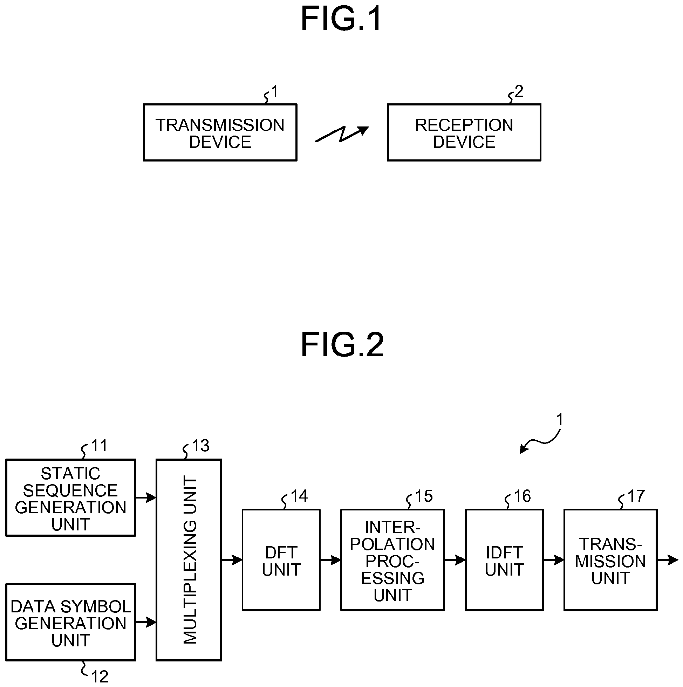

FIG. 1 is a diagram illustrating an example of a communication system configured to include a reception device according to a first embodiment of the present invention. The communication system according to the present embodiment includes a transmission device 1 and a reception device 2, and performs SC block transmission from the transmission device 1 to the reception device 2. It is noted that the communication system performing SC block transmission may be configured to have two communication devices each of which includes the transmission device 1 and the reception device 2, in which the communication devices perform SC block transmission bidirectionally.
FIG. 2 is a diagram illustrating a configuration example of the transmission device according to the first embodiment. The transmission device 1 according to the present embodiment includes a static sequence generation unit 11, a data symbol generation unit 12, a multiplexing unit 13, a Discrete Fourier Transform (DFT) unit 14, an interpolation processing unit 15, an Inverse Discrete Fourier Transform (IDFT) unit 16, and a transmission unit 17. The transmission device 1 constitutes a communication device on a transmission side that performs Single Carrier (SC) block transmission. FIG. 2 illustrates only a configuration necessary for explaining an operation of the present invention, in which configurations required for a general transmission device are partially omitted in illustration thereof.

The static sequence generation unit 11 generates a sequence of static symbols whose signal values are preset. Hereinafter, the sequence generated by the static sequence generation unit 11 is referred to as "sequence of static symbols". The sequence of static symbols is a symbol sequence to be inserted into an SC block in order to suppress an out-of-band spectrum, and is a symbol sequence to be inserted as a common value between SC blocks. The static sequence generation unit 11 generates a sequence of static symbols on a block-by-block basis in SC block transmission, and outputs the generated sequence of static symbols to the multiplexing unit 13.

The data symbol generation unit 12 generates a data symbol such as a Phase Shift Keying (PSK) symbol or a Quadrature Amplitude Modulation (QAM) symbol on the basis of information data to be transmitted to the reception device 2. The data symbol generation unit 12 generates a sequence of data symbols on a block-by-block basis in SC block transmission, and outputs the generated sequence of data symbols to the multiplexing unit 13.

The multiplexing unit 13 adds the sequence of static symbols generated by the static sequence generation unit 11 to the sequence of data symbols generated by the data symbol generation unit 12 to generate a block signal that is an SC block having ends in each of which the sequence of static symbols is inserted. The transmission device 1 is configured to include the static sequence generation unit 11 and the multiplexing unit 13 and to generate an SC block having ends in each of which the sequence of static symbols is inserted, and thereby can suppress an out-of-band spectrum in SC block transmission.

The DFT unit 14 is a time-to-frequency transform unit that performs DFT, that is, Fourier transform on the SC block generated by the multiplexing unit 13 so as to transform the SC block from a time-domain signal to a frequency-domain signal.

The interpolation processing unit 15 performs interpolation processing on an input signal from the DFT unit 14, that is, a frequency-domain SC block. For example, the interpolation processing is oversampling. Where the number of input signals to the interpolation processing unit 15 is represented as N and the oversampling rate is represented as L, the number of output signals from the interpolation processing unit 15 is LN. In a case of performing oversampling as the interpolation processing, the interpolation processing unit 15 inserts a zero into an input signal from the DFT unit 14. In this case, the interpolation processing unit 15 inserts a zero into the input signal by using, for example, the method described in Non-patent Literature 4 described above.

The IDFT unit 16 is a frequency-to-time transform unit that performs IDFT, that is, inverse Fourier transform on a frequency-domain SC block after having undergone the interpolation processing by the interpolation processing unit 15 so as to transform the frequency-domain SC block to a time-domain signal. In the following descriptions, a single piece of data that is outputted from the IDFT unit 16 is sometimes referred to as "sample".

The transmission unit 17 performs at least transform processing on an SC block after having been transformed to the time-domain signal by the IDFT unit 16 so as to transform the SC block to a radio-frequency band signal, and then transmits this signal to the reception device 2 that serves as a counterpart device.

Next, a configuration of an SC block is described. In a case of generating a single SC block in the transmission device 1, the static sequence generation unit 11 generates symbols $F_0$, $F_1$, $\cdots$, $F_{M/2-2}$, $F_{M/2-1}$, $\cdots$, $F_{M-1}$ as a sequence of static symbols formed of M static symbols and outputs the sequence of static symbols to the multiplexing unit 13. Meanwhile, the data symbol generation unit 12 generates and outputs ($N_D$-M) data symbols to the multiplexing unit 13. For the sake of simplicity of descriptions, M is assumed to be an even number. However, M may be an odd number. Any sequence may be used for a sequence of static symbols generated by the static sequence generation unit 11. It is possible to use a Zadoff-Chu sequence, a zero sequence, or other sequences as a sequence of static symbols.

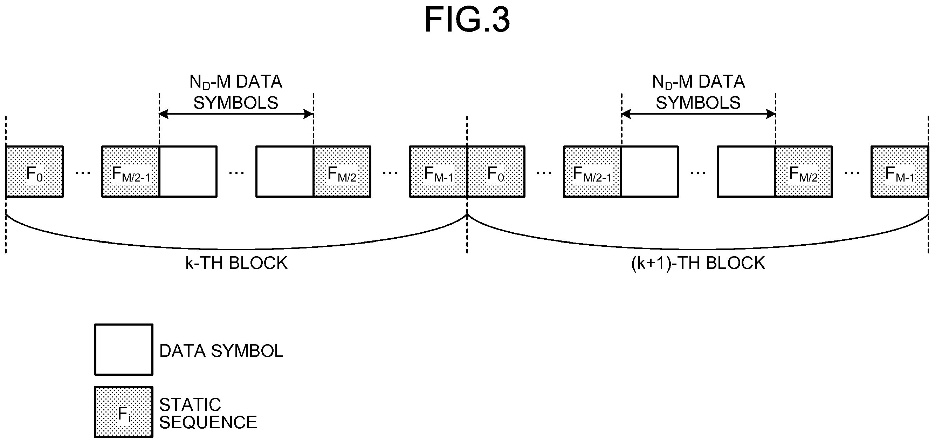

The multiplexing unit 13 divides the sequence of static symbols inputted from the static sequence generation unit 11 into two which are a first sequence on the leading side and a second sequence on the trailing side, and adds the first sequence to the leading end of the ($N_D$-M) data symbols inputted from the data symbol generation unit 12, while adding the second sequence to the trailing end of the ($N_D$-M) data symbols. Specifically, the multiplexing unit 13 divides the inputted sequence of static symbols into a first sequence and a second sequence, the first sequence being a first half of the M symbols, $F_0$, $F_1$, $\cdots$, $F_{M/2-2}$, $F_{M/2-1}$, and the second sequence being a second half of the M symbols, $F_{M/2-1}$, $\cdots$, $F_{M-1}$. The multiplexing unit 13 then adds to the leading end of the ($N_D$-M) data symbols, while adding the second sequence to the trailing end of the ($N_D$-M) data symbols. An SC block outputted from the multiplexing unit 13 to the DFT unit 14 is a signal having a configuration illustrated in FIG. 3.

Where M is an odd number, the multiplexing unit 13 divides the sequence of static symbols into one group of (M+1)/2 symbols and another group of (M-1)/2 symbols. In the above descriptions, the multiplexing unit 13 divides the sequence of static symbols into two groups having equal numbers of symbols, that is, M/2 symbols for each group. However, the multiplexing unit 13 may divide the sequence of static symbols into two groups having different numbers of symbols, for example, $M_1$ symbols for one group and $M_2$ symbols for another group ($0<M_1$, $0<M_2$, $M_1+M_2=M$, and $M_1 \# M_2$). In the following descriptions, the multiplexing unit 13 is assumed to divide the sequence of static symbols into two groups with equal numbers of symbols and then add the groups to the leading end and the trailing end of the data symbols, respectively, for the sake of simplicity of descriptions.

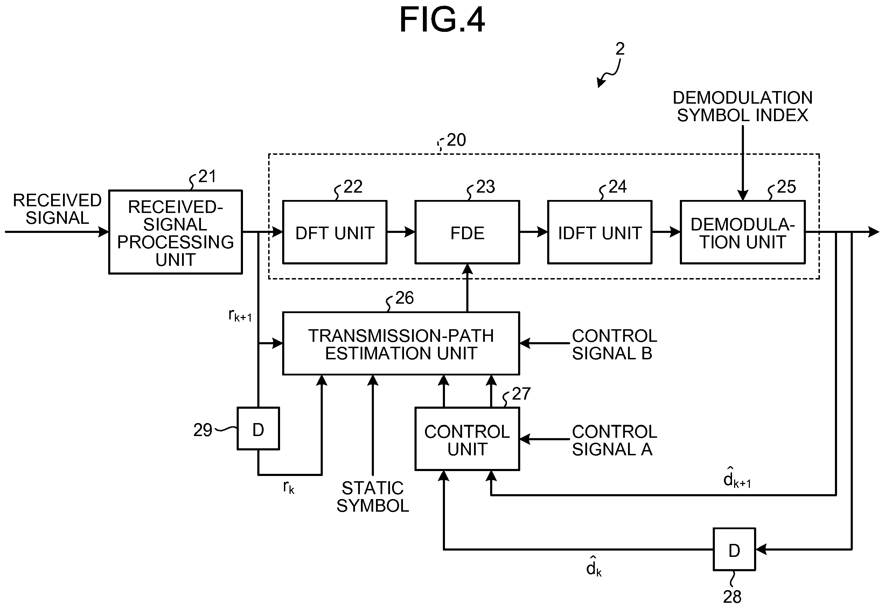

Next, the reception device 2 according to the first embodiment is described. FIG. 4 is a diagram illustrating a configuration example of the reception device according to the first embodiment.

The reception device 2 according to the present embodiment includes a received-signal processing unit 21, a DFT unit 22, a Frequency Domain Equalizer (FDE) 23, an IDFT unit 24, a demodulation unit 25, a transmission-path estimation unit 26, and a control unit 27, and constitutes a communication device on the receiver side of a communication system that performs SC block transmission. FIG. 4 illustrates a configuration necessary for explaining an operation of the present invention, in which illustrations of necessary configurations for a general reception device are partially omitted. Each of constituent elements described as "D" and denoted by reference numerals 28 and 29 is a storage unit that temporarily stores a signal inputted therein. When signals are inputted to the storage units 28 and 29, the storage units 28 and 29 hold the signals, and then output the signals held therein at a predetermined timing. The DFT unit 22, the FDE 23, the IDFT unit 24, and the demodulation unit 25 constitute a block signal demodulation unit 20.

The received-signal processing unit 21 performs inverse processing to the processing performed by the transmission unit 17 of the transmission device 1, on an inputted received signal, that is, a signal received from the transmission device 1 to generate a signal to be inputted to the DFT unit 22, the transmission-path estimation unit 26, and the storage unit 29.

The DFT unit 22 performs NL-point DFT on an input signal from the received-signal processing unit 21 to transform the input signal from a time-domain signal to a frequency-domain signal. The DFT unit 22 outputs the frequency-domain signal obtained by performing the transform processing to the FDE 23.

The FDE 23 uses a transmission-path estimation value inputted from the transmission-path estimation unit 26 to perform equalization processing on the frequency-domain signal inputted from the DFT unit 22. The FDE 23 outputs a signal obtained by performing the equalization processing in the frequency domain to the IDFT unit 24.

The IDFT unit 24 performs IDFT on the signal after having undergone the equalization processing in the FDE 23 to transform the signal to a time-domain signal. The IDFT unit 24 outputs the time-domain signal obtained by performing the transform processing to the demodulation unit 25.

The demodulation unit 25 demodulates data symbols included in a signal obtained by the transform to a time-domain signal in the IDFT unit 24. In addition to the signal outputted from the IDFT unit 24, a demodulation symbol index is inputted to the demodulation unit 25. The demodulation symbol index refers to information that instructs which symbol of the symbols included in an input signal from the IDFT unit 24 is to be demodulated. For example, in a case where an SC block having a construction illustrated in FIG. 3 is inputted, when the index at the position of $F_0$ is "0" and the index at the position of $F_{M-1}$ is "$N_D$-1", then symbol indexes to be demodulated are "M/2", "M/2+1", $\cdots$, "$N_D$-M/2-1" which refer to data symbols. Because data components are not included in a static sequence, the static sequence is not to be demodulated.

The transmission-path estimation unit 26 estimates the state of the transmission path between the transmission device 1 and the reception device 2. An operation of the transmission-path estimation unit 26 to estimate the state of the transmission path is described separately below in detail. The transmission-path estimation unit 26 outputs a transmission-path estimation value obtained by estimating the state of the transmission path to the FDE 23.

When the control unit 27 receives demodulated data symbols that are the data symbols obtained by the demodulation by the demodulation unit 25 and a control signal A instructs the control unit 27 to output the demodulated data symbols, the control unit 27 outputs the demodulated data symbols received from the demodulation unit 25 to the transmission-path estimation unit 26.

Next, the transmission-path estimation unit 26 is described. An operation of the transmission-path estimation unit 26 is briefly described below. The transmission-path estimation unit 26 obtains an initial value of a transmission-path estimation value. When data symbols are demodulated by using this initial value, the transmission-path estimation unit 26 receives the data symbols obtained by the demodulation. By using the received data symbols, the transmission-path estimation unit 26 obtains a transmission-path estimation value again. The transmission-path estimation unit 26 obtains the initial value of the transmission-path estimation value on the basis of a first SC block that is a received signal to be demodulated, a second SC block having been received at the immediately-previous timing, and a static sequence. Further, the transmission-path estimation unit 26 uses the first SC block, the second SC block, the static sequence, the data symbols of the first SC block obtained by the demodulation, and the data symbols of the second SC block obtained by the demodulation to obtain the transmission-path estimation value again. The transmission-path estimation unit 26 is described below in detail.

First, an input signal to the transmission-path estimation unit 26 is described. In this description, estimation of a transmission path in a case where a signal for the (k+1)-th block is received is explained as an example. An input signal to the transmission-path estimation unit 26 differs between a case of calculating an initial value of the transmission-path estimation value and a case of calculating a transmission-path estimation value again. In the case of calculating the initial value of the transmission-path estimation value, a received signal of the (k+1)-th block and a received signal of the k-th block are inputted to the transmission-path estimation unit 26. That is, a received signal **r(bold-faced)**$_{k+1}$ of the (k+1)-th block and a received signal **r(bold-faced)**$_k$ of the k-th block are inputted to the transmission-path estimation unit 26. A sequence of static symbols to be inserted in the data symbols by the transmission device 1 is inputted to the transmission-path estimation unit 26 as a static sequence, the said sequence of static symbols being a sequence of static symbols $F_0$, $F_1$, ···, $F_{M/2-2}$, $F_{M/2-1}$, ···, $F_{M-1}$ that is equal to the sequence of static symbols generated by the static sequence generation unit 11. The transmission-path estimation unit 26 uses these received signals of the (k+1)-th and k-th blocks as well as the static sequence to calculate the initial value of the transmission-path estimation value. In the case of calculating the transmission-path estimation value again, data symbols obtained by the demodulation using the initial value of the transmission-path estimation value are further inputted to the transmission-path estimation unit 26. Specifically, demodulated data symbols expressed by the following expression (1) and demodulated data symbols expressed by the following expression (2) are inputted to the transmission-path estimation unit 26.

[Formula 1]

$$\hat{\boldsymbol{d}}_k \quad \cdots (1)$$

[Formula 2]

$$\hat{\boldsymbol{d}}_{k+1} \quad \cdots (2)$$

These demodulated data symbols are inputted to the transmission-path estimation unit 26 through the control unit 27. In the operation to calculate the transmission-path estimation value again, the transmission-path estimation unit 26 uses the data symbols obtained by the demodulation in addition to the input values used to calculate the initial value.

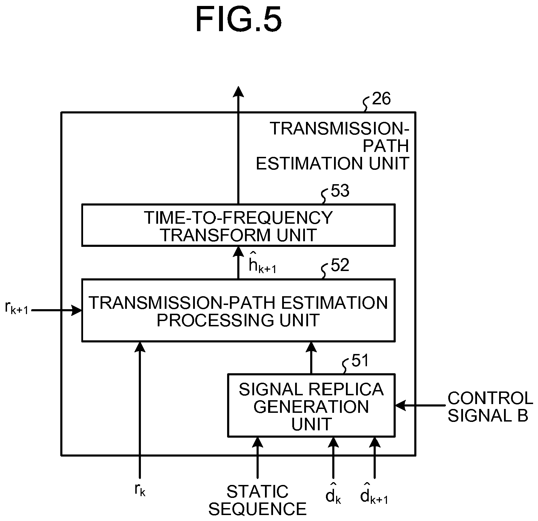

FIG. 5 is a diagram illustrating a configuration example of the transmission-path estimation unit 26. The transmission-path estimation unit 26 includes a signal replica generation unit 51, a transmission-path estimation processing unit 52, and a time-to-frequency transform unit 53. The static sequence and the demodulated data symbols of the input signals to the transmission-path estimation unit 26 described above become input signals to the signal replica generation unit 51. The received signal of the (k+1)-th block and the received signal of the k-th block become input signal to the transmission-path estimation processing unit 52.

The signal replica generation unit 51 generates a first replica formed of static symbols and zero symbols, or a second replica formed of static symbols and data symbols. When a control signal B instructs to generate an initial value of a transmission-path estimation value, the signal replica generation unit 51 generates the first replica. When the signal B instructs to regenerate the transmission-path estimation value, the signal replica generation unit 51 generates the second replica.

The transmission-path estimation processing unit 52 estimates a transmission path on the basis of the received signal of the (k+1)-th block and the received signal of the k-th block, and the signal replica generated by the signal replica generation unit 51. The signal replica generated by the signal replica generation unit 51 is either the first replica or the second replica described above.

The time-to-frequency transform unit 53 transforms the transmission-path estimation value calculated by the transmission-path estimation processing unit 52 from a time-domain signal to a frequency-domain signal.

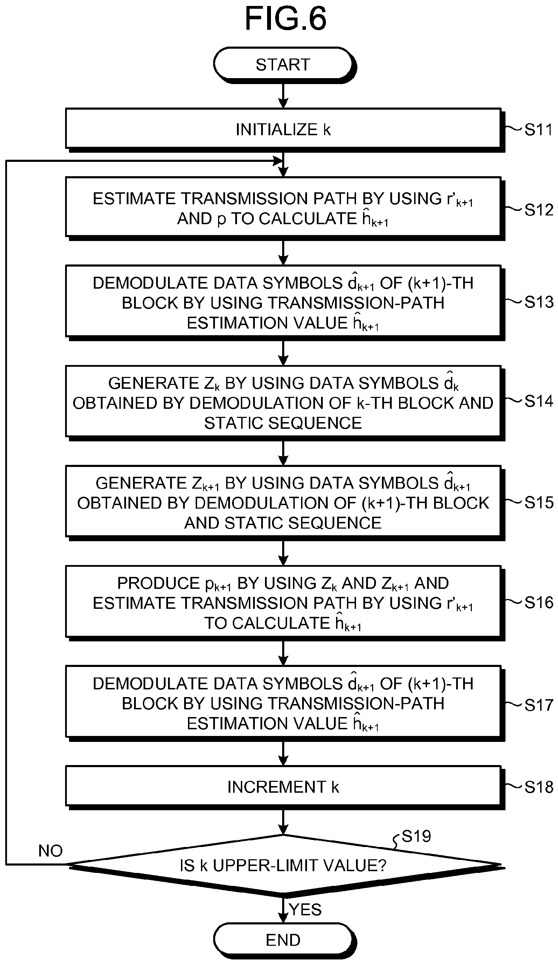

FIG. 6 is a flowchart illustrating an example of an operation of the reception device according to the first embodiment. FIG. 6 illustrates the operation of the reception device 2 when the reception device 2 demodulates data symbols transmitted in the (k+1)-th block. With reference to FIG. 6, the operation of the reception device 2, particularly, the operation to calculate a transmission-path estimation value is described below.

First, the reception device 2 initializes k, that is, sets to k=0 (Step S11). Next, the reception device 2 estimates a transmission path by using signal vectors **r'(bold-faced)**$_{k+1}$ and **p(bold-faced)** described below, and calculates an initial value of a transmission-path estimation value (Step S12). The transmission-path estimation unit 26 performs this processing of Step S12. At Step S12, the transmission-path estimation unit 26 calculates the transmission-path estimation value in accordance with a procedure described below.

In the transmission-path estimation value calculation processing at Step S12, first the signal replica generation unit 51 in the transmission-path estimation unit 26 divides an inputted static sequence to generate two vectors expressed by the following equation (3).

[Formula 3]

$$\boldsymbol{F_0} = \left[ F_0 , F_1 , \cdots , F_{\frac{M}{2}-1} \right]^T$$

$$\boldsymbol{F_1} = \left[ F_{-\frac{M}{2}} , F_{-\frac{M}{2}+1} , \cdots , F_{-1} \right]^T \qquad \cdots (3)$$

Next, the signal replica generation unit 51 generates a signal vector expressed by the following equation (4) by using the vectors expressed by the equation (3). In the equation (4), $\boldsymbol{0(\text{bold-f aced})}_{ND-M}$ is a column vector having elements of $(N_D\text{-}M)$ zeros. The signal vector expressed by the equation (4) is the first replica formed of static symbols and zero symbols. The first replica is equivalent to a signal in which the data symbols in a block signal generated by the transmission device 1 are replaced with zero symbols.

[Formula 4]

$$\boldsymbol{Z}_F = \left[ \boldsymbol{F}_0^T , \boldsymbol{0}_{N_D-M}^T , \boldsymbol{F}_1^T \right]^T \qquad \cdots (4)$$

Next, the transmission-path estimation processing unit 52 performs $N_D$-point DFT processing on the signal vector $\boldsymbol{Z(\text{bold-faced})}_F$ expressed by the equation (4).

Subsequently, the transmission-path estimation processing unit 52 performs an interpolation processing on $N_D$ signals obtained by performing the DFT processing in the same manner as the processing performed by the interpolation processing unit 15 in the transmission device 1.

Next, the transmission-path estimation processing unit 52 performs N-point IDFT processing on the signals obtained by performing the interpolation processing. A signal vector obtained by performing the IDFT processing is represented as $\boldsymbol{t(\text{bold-faced})}_Z = [t_0, t_1, \cdots, t_{N-1}]^T$. Where the length of static sequence components to be used for estimating a transmission path in the time domain is represented as M' and M' is an even number, a vector $\boldsymbol{p(\text{bold-faced})}$ constructed of known sequence components in the time domain is expressed by the following equation (5).

[Formula 5]

$$\boldsymbol{p} = \left[ p_0, \cdots, p_{M'-1} \right]^T = \left[ t_{N-\frac{M'}{2}} , \cdots , t_{N-1} , t_0 , \cdots , t_{\frac{M'}{2}-1} \right]^T \qquad \cdots (5)$$

The received signal $\boldsymbol{r(\text{bold-faced})}_{k+1}$ of the (k+1)-th block is expressed by the following equation (6). A longest path delay on a multipath transmission channel is represented as P.

[Formula 6]

$$\boldsymbol{r}_{k+1} = \left[ r_{k+1,0} , r_{k+1,1} , \cdots , r_{k+1,N-1} \right]^T \qquad \cdots (6)$$

In this case, a received signal satisfied by the received signal of the k-th block and the received signal of the (k+1)-th block can be expressed by the following equation (7).

[Formula 7]

$$\boldsymbol{r}'_{k+1} = \left[ r_{k,N-1-\frac{M'}{2}+P-1} , r_{k,N-1-\frac{M'}{2}+L} , \cdots , r_{k,N-1} , r_{k+1,0} , r_{k+1,1} , \cdots , r_{k+1,\frac{M'}{2}-1} \right]^T$$

$$\cdots (7)$$

Subsequently, the transmission-path estimation processing unit 52 generates a matrix whose elements are known sequence components, specifically, a matrix expressed by the following equation (8) as a matrix to be used for estimating a transmission path.

[Formula 8]

$$\boldsymbol{B} = \begin{bmatrix} p_{P-1} & \cdots & p_1 & p_0 \\ p_P & \cdots & p_2 & p_1 \\ \vdots & \ddots & \vdots & \vdots \\ p_{M'-1} & \cdots & p_{M'-P+1} & p_{M'-P} \end{bmatrix} \quad \cdots (8)$$

Next, the transmission-path estimation processing unit 52 calculates a transmission-path estimation value in accordance with the following equation (9). In the equation (9), "H" indicates the Hermitian transpose of a vector. The same applies to other formulas described below.

[Formula 9]

$$\hat{\boldsymbol{h}}_{k+1} = \left(\boldsymbol{B}^H \boldsymbol{B}\right)^{-1} \boldsymbol{B}^H \boldsymbol{r}'_{k+1} \quad \cdots (9)$$

Subsequently, the time-to-frequency transform unit 53 transforms the transmission-path estimation value calculated by the transmission-path estimation processing unit 52 to a frequency-domain signal. In accordance with the procedure described above, the initial value of the transmission-path estimation value is calculated at Step S12.

Next, the reception device 2 demodulates data symbols of the (k+1)-th block by using the transmission-path estimation value calculated at Step S12 (Step S13). Step S13 is a first demodulating step. The FDE 23, the IDFT unit 24, and the demodulation unit 25, which constitute the block signal demodulation unit 20, perform the processing of Step S13. That is, using the transmission-path estimation value calculated by the transmission-path estimation unit 26 at Step S12, the FDE 23 performs equalization processing in a frequency domain. The IDFT unit 24 transforms the signal obtained by the equalization processing performed by the FDE 23 to a time-domain signal. The demodulation unit 25 then demodulates data symbols included in this time-domain signal.

Subsequently, the reception device 2 uses the data symbols obtained by the demodulation of the k-th block and the static sequence to generate a signal vector **Z(bold-faced)**$_k$ (Step S14), and uses the data symbols obtained by the demodulation of the (k+1)-th block and the static sequence to generate a signal vector **Z(bold-faced)**$_{k+1}$ (Step S15). The transmission-path estimation unit 26 performs these processings of Steps S14 and S15.

In the vector generation processing at Steps S14 and S15, the signal replica generation unit 51 in the transmission-path estimation unit 26 uses the demodulated data symbols of the k-th block, the demodulated data symbols of the (k+1)-th block, and the static sequence to generate two signal vectors expressed by the following equation (10). Each of the signal vectors expressed by the equation (10) is equivalent to a vector obtained by replacing ($N_D$-M) zero symbols included in the signal vector expressed by the equation (4) with the demodulated data symbols. The signal vectors expressed by the equation (10) are the second replicas formed of the static symbols and the demodulated data symbols. **Z(bold-faced)**$_{k+1}$ of the second replicas is equivalent to a signal obtained by replacing the data symbols in the (k+1)-th block signal generated by the transmission device 1 with the demodulated data symbols obtained by demodulating the (k+1)-th block signal using the initial value of the transmission-path estimation value. **Z(bold-faced)**$_k$ of the second replicas is equivalent to a signal obtained by replacing the data symbols in the k-th block signal generated by the transmission device 1 with the demodulated data symbols of the k-th block.

[Formula 10]

$$\boldsymbol{Z}_k = \left[\boldsymbol{F}_0^T, \hat{\boldsymbol{d}}_k, \boldsymbol{F}_1^T\right]^T$$

$$\boldsymbol{Z}_{k+1} = \left[\boldsymbol{F}_0^T, \hat{\boldsymbol{d}}_{k+1}, \boldsymbol{F}_1^T\right]^T \quad \cdots (10)$$

When Steps S14 and S15 are performed, the control signal A inputted to the control unit 27 illustrated in FIG. 4 instructs the control unit 27 to output the demodulated data symbols of the k-th block and the demodulated data symbols of the (k+1)-th block. Further, the control signal B inputted to the signal replica generation unit 51 instructs the signal replica generation unit 51 to generate a replica using the static sequence and the demodulated data symbols. The control signals A and B are outputted from, for example, a reception control unit (not illustrated) that controls the entire receiving operation of the reception device 2. Although the control signal A inputted to the control unit 27 and the control signal B inputted to the signal replica generation unit 51 are separate signals, these control signals may be modified to be a common control signal. In a case where a common control signal is inputted to the control unit 27 and the signal replica generation unit 51, for example, when the common control signal has a High-level, the control unit 27 outputs demodulated data symbols, while the signal replica generation unit 51 generates the second replica, that is, the signal vector expressed by the equation (10) using the demodulated data symbols and the static sequence. When the common control signal has a Low-level, the control unit 27 does not output demodulated data symbols, while the signal replica generation unit 51 generates the first replica, that is, the signal vector expressed by the equation (4) using zero symbols and the static sequence.

Next, the reception device 2 generates a vector **p(bold-faced)**$_{k+1}$ using the signal vector generated at Step S14 and the signal vector generated at Step S15, and estimates a transmission path using **r(bold-faced)'**$_{k+1}$ to obtain the transmission-path estimation value (Step S16). The transmission-path estimation unit 26 performs this processing of Step S16. At Step S16, the transmission-path estimation unit 26 calculates a transmission-path estimation value in accordance with a procedure described below.

In the calculation processing for the transmission-path estimation value at Step S16, first the transmission-path estimation processing unit 52 performs $N_D$-point DFT processing on the signal vector **Z(bold-faced)**$_{k+1}$ expressed by the equation (10) .

Next, the transmission-path estimation processing unit 52 performs the interpolation processing on $N_D$ signals, obtained by performing the DFT processing, in the same manner as the processing performed by the interpolation processing unit 15 in the transmission device 1.

Next, the transmission-path estimation processing unit 52 performs N-point IDFT processing on the signals obtained by performing the interpolation processing. A signal vector obtained by performing the IDFT processing is represented as **t(bold-faced)**$_{k+1}$ = $[t_{k+1, 0}, t_{k+1,1}, \cdots, t_{k+1,N-1}]^T$.

The transmission-path estimation processing unit 52 performs the processing on the signal vector **Z(bold-faced)**$_k$ expressed by the equation (10) in the same manner as the processing described above and performed on the signal vector **Z(bold-faced)**$_{k+1}$. That is, the transmission-path estimation processing unit 52 performs $N_D$-point DFT processing on the signal vector **Z(bold-faced)**$_k$ expressed by the equation (10), and further the interpolation processing and the N-point IDFT processing. A signal vector obtained by performing the IDFT processing is represented as **t(bold-faced)**$_k$ = $[t_{k,0}, t_{k,1}, \cdots, t_{k,N-1}]^T$.

Next, the transmission-path estimation processing unit 52 generates a vector expressed by the following equation (11) using the elements of the signal vectors **t(bold-faced)**$_k$ and **t(bold-faced)**$_{k+1}$ described above.

[Formula 11]

$$\boldsymbol{P}_{k+1} = \left[ p_{k+1,0}, \cdots, p_{k+1,M'-1} \right]^T = \left[ t_{k,N-\frac{M'}{2}}, \cdots, t_{k,N-1}, t_{k+1,0}, \cdots, t_{k+1,\frac{M'}{2}-1} \right]^T$$

$$\cdots (11)$$

Subsequently, the transmission-path estimation processing unit 52 generates a transmission-path matrix expressed by the following equation (12).

[Formula 12]

$$\boldsymbol{B}_{k+1} = \begin{bmatrix} p_{k+1,P-1} & \cdots & p_{k+1,1} & p_{k+1,0} \\ p_{k+1,P} & \cdots & p_{k+1,2} & p_{k+1,1} \\ \vdots & \ddots & \vdots & \vdots \\ p_{k+1,M'-1} & \cdots & p_{k+1,M'-P+1} & p_{k+1,M'-P} \end{bmatrix} \qquad \cdots (12)$$

Next, the transmission-path estimation processing unit 52 calculates a transmission-path estimation value in accordance with the following equation (13).

[Formula 13]

$$\hat{\boldsymbol{h}}_{k+1} = \left(\boldsymbol{B}_{k+1}^{H}\boldsymbol{B}_{k+1}\right)^{-1}\boldsymbol{B}_{k+1}^{H}\boldsymbol{r}_{k+1}' \qquad \cdots (13)$$

Subsequently, the time-to-frequency transform unit 53 transforms the transmission-path estimation value calculated by the transmission-path estimation processing unit 52 to a frequency-domain signal, and outputs the transmission-path estimation value in the frequency domain to the FDE 23. In accordance with the procedure described above, the transmission-path estimation value is calculated again at Step S16. Steps S14 to S16 are equivalent to the recalculating step of recalculating the transmission-path estimation value.

Next, the reception device 2 demodulates data symbols of the (k+1)-th block using the transmission-path estimation value calculated at Step S16 (Step S17). Step S17 is a second demodulating step. The FDE 23, the IDFT unit 24, and the demodulation unit 25, which constitute the block signal demodulation unit 20, perform the processing of Step S17. That is, by using the transmission-path estimation value calculated by the transmission-path estimation unit 26 at Step S16, the FDE 23 performs equalization processing in the frequency domain. The IDFT unit 24 transforms the signal obtained by performing the equalization processing by the FDE 23 to a time-domain signal, and demodulates data symbols included in this time-domain signal. The data symbols obtained by the demodulation by the demodulation processing of Step S17 are final demodulated data symbols.

Subsequently, the reception device 2 increments k (Step S18), and then checks whether k has reached an upper-limit value (Step S19). When k is not an upper-limit value (NO at Step S19), the processing flow returns to Step S12, and the reception device 2 continues the processing at Steps S12 to S18. When k is an upper-limit value (YES at Step S19), the reception device 2 ends the processing.

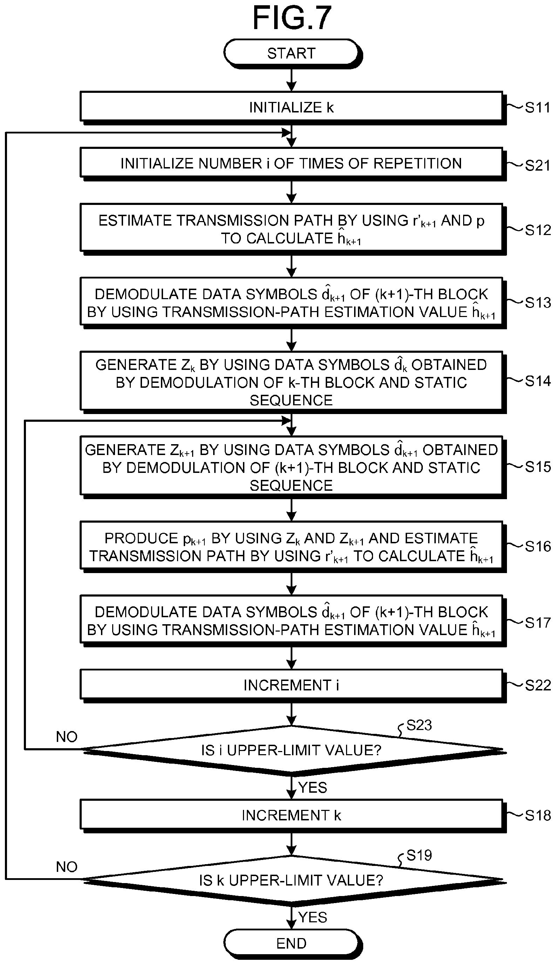

In order to improve the accuracy in estimating a transmission path and the demodulation accuracy, the transmission-path estimation processing performed using the demodulated data symbols and the static sequence as described above, and the demodulation processing described above may be repeated. FIG. 7 is a flowchart illustrating an operation example when the processing described above is repeated. In the flowchart illustrated in FIG. 7, Step S21 is added between Steps S11 and S12 of the flowchart illustrated in FIG. 6, and further Steps S22 and S23 are added between Steps S17 and S18 of the flowchart illustrated in FIG. 6. At Step S21 that is performed after Step S11, the reception device 2 initializes the number i of times of repetition to i=0. At Step S22 that is performed after Step S17, the reception device 2 increments the number i. At Step S23, the reception device 2 checks whether the number i has reached an upper-limit value. When i is not an upper-limit value (NO at Step S23), the processing flow returns to Step S15, and the reception device 2 continues the processing of Steps S15 to S22. When i is an upper-limit value (YES at Step S23), the reception device 2 executes Step S18.

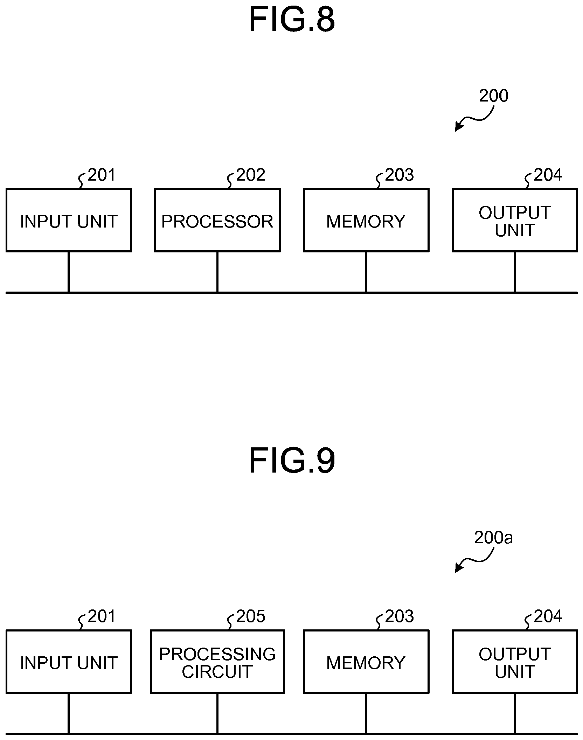

A hardware configuration to implement constituent elements of the reception device 2 illustrated in FIG. 4 is described next. In a case where some of the constituent elements of the reception device 2 are implemented by software, the software-implemented constituent element is implemented by a control circuit 200 illustrated in FIG. 8. The control circuit 200 is configured to include an input unit 201, a processor 202, a memory 203, and an output unit 204. The input unit 201 is an interface circuit that receives data inputted from outside and provides the received data to the processor 202. The processor 202 is a CPU (Central Processing Unit; also referred to as "central processing device", "processing device", "computing device", "microprocessor", "microcomputer", "processor", or "DSP"), a system LSI (Large Scale Integration), or the like. The memory 203 is a nonvolatile or volatile semiconductor memory such as a RAM (Random Access Memory), a ROM (Read Only Memory), a flash memory, an EPROM (Erasable Programmable Read Only Memory), or an EEPROM (Electrically Erasable Programmable Read Only Memory), or is a magnetic disc, a flexible disc, an optical disc, a compact disc, a minidisc, a DVD (Digital Versatile Disc), or the like. The output unit 204 is an interface circuit that transmits data generated by the processor 202 or data read from the memory 203 to outside. In a case where at least some of the constituent elements of the reception device 2 are implemented by the control circuit 200 illustrated in FIG. 8, the partial constituent elements are implemented by the processor 202 reading and executing a program corresponding to each of these partial constituent elements of the reception device 2, which is stored in the memory 203. The memory 203 is used also as a temporary memory for the processor 202 to perform each processing.

In a case where each of the constituent elements of the reception device 2 is implemented by dedicated hardware, each of the constituent elements is implemented by a control circuit 200a illustrated in FIG. 9. The control circuit 200a is configured to include the input unit 201, a processing circuit 205, the memory 203, and the output unit 204. That is, the control circuit 200a corresponds to circuitry obtained by replacing the processor 202 in the control circuit 200 illustrated in FIG. 8 with the processing circuit 205. In the control circuit 200a, the input unit 201 receives data inputted from outside, and provides the received data to the processing circuit 205. The processing circuit 205 is constructed of a number of electronic circuits, each of which performs processing corresponding to each of the constituent elements of the reception device 2 illustrated in FIG. 4. The processing circuit 205 corresponds to any of a single circuit, a composite circuit, a programmed processor, a parallel-programmed processor, an ASIC (Application Specific Integrated Circuit), an FPGA (Field Programmable Gate Array), or a combination thereof. The output unit 204 transmits data

**EP 3 518 481 A1**

generated by the processing circuit 205 or data read from the memory 203 to outside.

As described above, when the reception device 2 according to the present embodiment receives a (k+1)-th block signal, the reception device 2 first generates a first replica by using static symbols and zero symbols, then calculates an initial value of a transmission-path estimation value on the basis of the generated first replica, the received (k+1)-th block signal, and an immediately-previously received k-th block signal, and demodulates data symbols included in the (k+1)-th block signal by using the calculated initial value. The (k+1)-th block signal is the first block signal. The k-th block signal is the second block signal. Next, the reception device 2 generates a second replica by using the static symbols and the demodulated data symbols obtained by performing demodulation processing using the initial value of the transmission-path estimation value, and recalculates the transmission-path estimation value on the basis of the generated second replica, the (k+1)-th block signal, and the k-th block signal. The reception device 2 then uses the recalculated transmission-path estimation value to demodulate data symbols included in the (k+1)-th block signal. Accordingly, the reception device 2 can improve the accuracy in estimating a transmission path.

Second embodiment.

A reception device according to a second embodiment is described below. In the first embodiment, description has been given for the reception device 2 configured to generate a replica so as to improve the accuracy in estimating a transmission path. In the present embodiment, in contrast, description is given for a reception device configured to remove data symbol components included in a static sequence from a received signal to be used for estimating a transmission path, that is, from the static sequence, so as to improve the accuracy in estimating a transmission path. Explanations for parts common to the reception device 2 according to the first embodiment are omitted.

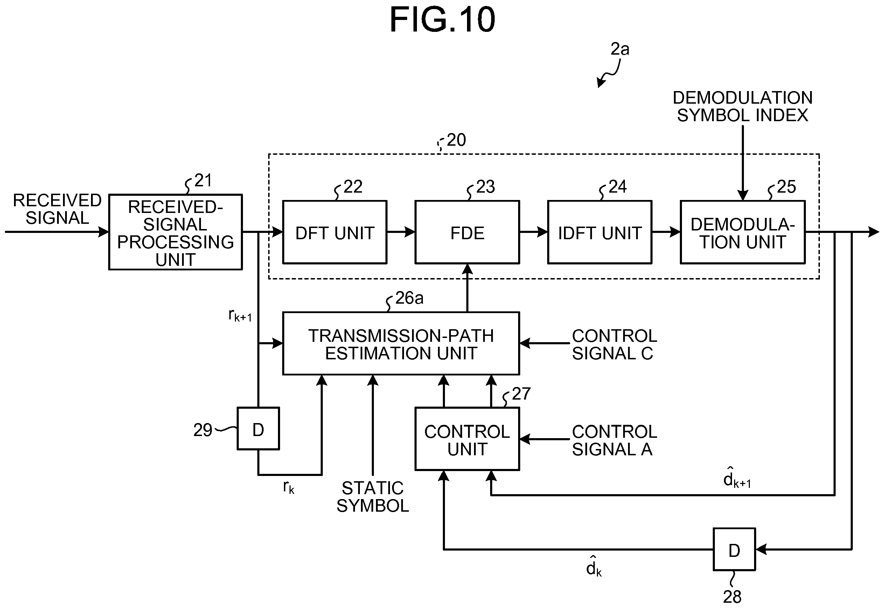

FIG. 10 is a diagram illustrating a configuration example of the reception device according to the second embodiment. A reception device 2a according to the present embodiment is configured by replacing the transmission-path estimation unit 26 in the reception device 2 according to the first embodiment with a transmission-path estimation unit 26a. Constituent elements of the reception device 2a other than the transmission-path estimation unit 26a are identical to those of the reception device 2, and therefore the identical constituent elements are omitted in description. Signals identical to those inputted to the transmission-path estimation unit 26 described in the second embodiment are inputted to the transmission-path estimation unit 26a.

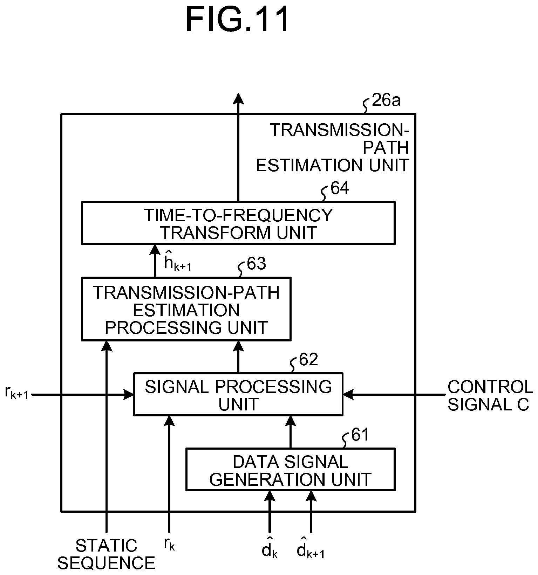

FIG. 11 is a diagram illustrating a configuration example of the transmission-path estimation unit 26a. The transmission-path estimation unit 26a includes a data signal generation unit 61, a signal processing unit 62, a transmission-path estimation processing unit 63, and a time-to-frequency transform unit 64. The time-to-frequency transform unit 64 performs processing similar to that in the time-to-frequency transform unit 53 in the transmission-path estimation unit 26 illustrated in FIG. 5, and so detailed descriptions thereof are omitted. Demodulated data symbols of the input signals to the transmission-path estimation unit 26a become input signals to the data signal generation unit 61. A received signal of the (k+1)-th block and a received signal of the k-th block become input signals to the signal processing unit 62. A static sequence becomes an input signal to the transmission-path estimation processing unit 63.

On the basis of the demodulated data symbols, the data signal generation unit 61 generates a signal vector formed including the demodulated data symbols and zero symbols.

On the basis of the signal vector generated by the data signal generation unit 61, the signal processing unit 62 removes data symbol components from the received signal.

The transmission-path estimation processing unit 63 estimates a transmission path on the basis of the static sequence and an input signal from the signal processing unit 62.

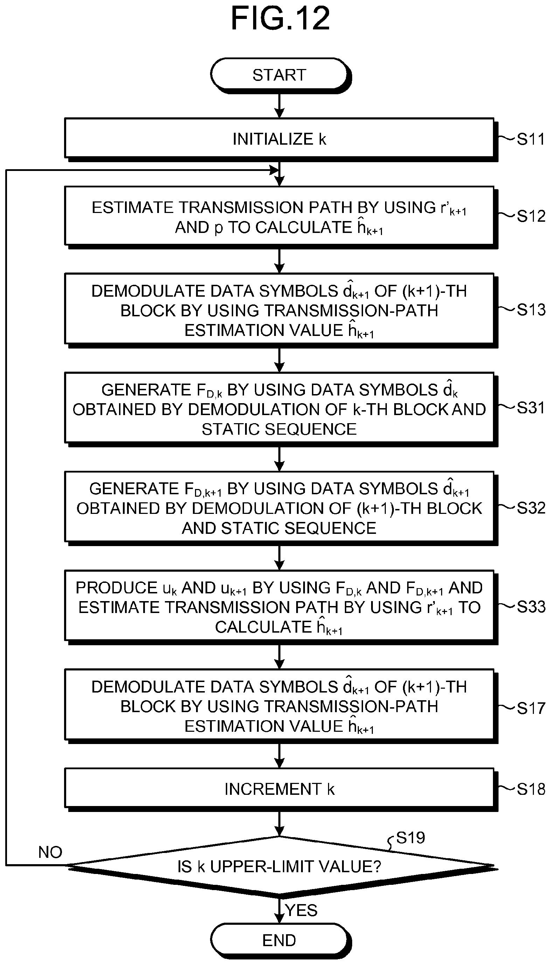

FIG. 12 is a flowchart illustrating an example of the operation of the reception device according to the second embodiment. FIG. 12 illustrates the operation of the reception device 2a when the reception device 2a demodulates data symbols transmitted in the (k+1)-th block. The flowchart illustrated in FIG. 12 is equivalent to a flowchart in which Steps S14 to S16 of the flowchart illustrated in FIG. 6, that is, the flowchart illustrating the operation of the reception device 2 according to the first embodiment, are replaced with Steps S31 to S33. Therefore, Steps S11 to S13 and steps S17 to S19 which are common to those in the first embodiment are omitted in description. At Step S12 illustrated in FIG. 12, the transmission-path estimation processing unit 63 performs processing to obtain an initial value of a transmission-path estimation value described in the first embodiment. At this time, the signal processing unit 62 outputs a received signal $\mathbf{r(bold\text{-}faced)}_{k+1}$ of the (k+1)-th block and a received signal $\mathbf{r(bold\text{-}faced)}_k$ of the k-th block to the transmission-path estimation processing unit 63. That is, when a control signal C instructs to calculate an initial value of a transmission-path estimation value, the signal processing unit 62 outputs the received signals $\mathbf{r(bold\text{-}faced)}_{k+1}$ and $\mathbf{r(bold\text{-}faced)}_k$ to the transmission-path estimation processing unit 63. When the control signal C does not instruct to calculate an initial value of a transmission-path estimation value, the signal processing unit 62 performs processing described later, and removes data symbol components from the received signal.

When the processing of Step S13 is ended, the reception device 2a generates a signal vector $\mathbf{F(bold\text{-}faced)}_{D,k}$ using the data symbols obtained by the demodulation of the k-th block and the static sequence (Step S31), and generates

**12**

a signal vector **F(bold-faced)**$_{D,k+1}$ by using the data symbols obtained by the demodulation of the (k+1)-th block and the static sequence (Step S32). The transmission-path estimation unit 26a performs these processing of Steps S31 and S32.

In the vector generation processing at Steps S31 and S32, the data signal generation unit 61 in the transmission-path estimation unit 26a uses the demodulated data symbols of the k-th block, the demodulated data symbols of the (k+1)-th block, and the static sequence to generate two signal vectors expressed by the following equation (14).
[Formula 14]

$$\boldsymbol{F}_{D,k+1} = \left[ \boldsymbol{0}_{\frac{M}{2}}^{T}, \hat{\boldsymbol{d}}_{k+1}, \boldsymbol{0}_{\frac{M}{2}}^{T} \right]^{T}$$

$$\boldsymbol{F}_{D,k} = \left[ \boldsymbol{0}_{\frac{M}{2}}^{T}, \hat{\boldsymbol{d}}_{k}, \boldsymbol{0}_{\frac{M}{2}}^{T} \right]^{T} \quad \cdots (14)$$

Each of the signal vectors expressed by the equation (14) is formed including the demodulated data symbols and zero symbols. Specifically, one group of M/2 zero symbols and another group of M/2 zero symbols are arranged before and after the demodulated data symbols, respectively. A signal received by the reception device 2a from the transmission device 1 has a formation in which M/2 static symbols are arranged before the data symbols and M/2 static symbols are arranged after the data symbols. For this reason, it is possible to remove data symbol components from the received signal using the signal vector expressed by the equation (14), and generate a signal including only a sequence of static symbols. **F(bold-faced)**$_{D,k+1}$ of the signal vectors expressed by the equation (14) is equivalent to a signal in which the static symbols in a block signal generated by the transmission device 1 are replaced with zero symbols, and further the data symbols are replaced with the demodulated data symbols obtained by demodulating the (k+1)-th block signal using the initial value of the transmission-path estimation value. **F(bold-faced)**$_{D,k}$ of the signal vectors is equivalent to a signal in which the static symbols in the k-th block signal generated by the transmission device 1 are replaced with zero symbols, and further the data symbols are replaced with the demodulated data symbols of the k-th block.

Next, the reception device 2a produces **u(bold-faced)**$_k$ and **u(bold-faced)**$_{k+1}$ using **F(bold-faced)**$_{D,k}$ and **F(bold-faced)**$_{D,k+1}$ generated at Steps S31 and S32, then estimates a transmission path using the signal vector **r'(bold-faced)**$_{k+1}$, and calculates the transmission-path estimation value (Step S33). The transmission-path estimation unit 26a performs this processing of Step S33. At Step S33, the transmission-path estimation unit 26a calculates a transmission-path estimation value in accordance with a procedure described below.

In the calculation processing for a transmission-path estimation value at Step S33, first the signal processing unit 62 performs $N_D$-point DFT processing on the signal vector **F(bold-faced)**$_{D,k+1}$ expressed by the equation (14) .

Next, the signal processing unit 62 performs the interpolation processing on $N_D$ signals obtained by performing the DFT processing, in the same manner as the processing performed by the interpolation processing unit 15 in the transmission device 1.

Subsequently, the signal processing unit 62 performs N-point IDFT processing on the signals obtained by performing the interpolation processing. A signal vector obtained by performing the IDFT processing is represented as **u(bold-faced)**$_{k+1}$=[$u_{k+1,0}$, $u_{k+1,1}$, $\cdots$, $u_{k+1,N-1}$]$^T$.

The signal processing unit 62 performs processing on the signal vector **F(bold-faced)**$_{D,k}$ expressed by the equation (14) in the same manner as the processing described above and performed on the signal vector **F(bold-faced)**$_{D,k+1}$. That is, the signal processing unit 62 performs $N_D$-point DFT processing on the signal vector **F(bold-faced)**$_{D,k}$ expressed by the equation (14), and further performs the interpolation processing and the N-point IDFT processing. A signal vector obtained by performing the IDFT processing is represented as **u(bold-faced)**$_k$=[$u_{k,0}$, $u_{k,1}$, $\cdots$, $u_{k,N-1}$]$^T$.

Next, the signal processing unit 62 generates a vector expressed by the following equation (15) using the elements of the signal vectors **u(bold-faced)**$_k$ and **u(bold-faced)**$_{k+1}$ described above.
[Formula 15]

$$\boldsymbol{q}_{k+1} = \left[ q_{k+1,0}, \cdots, q_{k+1,M'-1} \right]^{T} = \left[ u_{k,N-\frac{M'}{2}}, \cdots, u_{k,N-1}, u_{k+1,0}, \cdots, u_{k+1,\frac{M'}{2}-1} \right]^{T}$$

$$\cdots (15)$$

Subsequently, the signal processing unit 62 generates a matrix expressed by the following equation (16).
[Formula 16]

$$\boldsymbol{C}_{k+1} = \begin{bmatrix} q_{k+1,P-1} & \cdots & q_{k+1,1} & q_{k+1,0} \\ q_{k+1,P} & \cdots & q_{k+1,2} & q_{k+1,1} \\ \vdots & \ddots & \vdots & \vdots \\ q_{k+1,M'-1} & \cdots & q_{k+1,M'-P+1} & q_{k+1,M'-P} \end{bmatrix} \quad \cdots (16)$$

Next, the signal processing unit 62 generates a signal vector expressed by the following equation (17) by using the received signal of the (k+1)-th block and the matrix expressed by the equation (16). The signal vector expressed by the equation (17) is a replica including only static symbols, that is, a replica of a signal obtained by removing the data symbol components from the received signal. The signal processing unit 62 outputs the generated replica to the transmission-path estimation processing unit 63.
[Formula 17]

$$\boldsymbol{r}''_{k+1} = \boldsymbol{r}'_{k+1} - \boldsymbol{C}_{k+1}\hat{\boldsymbol{h}}_{k+1} \quad \cdots (17)$$

Next, the transmission-path estimation processing unit 63 estimates a transmission path using the replica received from the signal processing unit 62, that is, static symbol components.

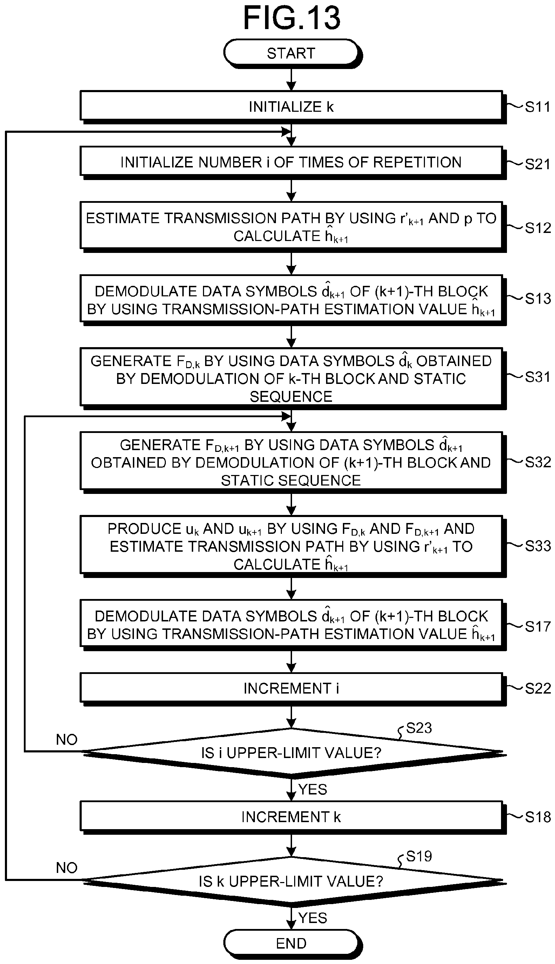

Similarly to the first embodiment, in order to improve the accuracy in estimating a transmission path and the demodulation accuracy, the transmission-path estimation processing performed using the demodulated data symbols and the static sequence as described above, and the demodulation processing described above may be repeated. FIG. 13 is a flowchart illustrating an operation example when the processing described above are repeated. In the flowchart illustrated in FIG. 13, Step S21 is added between Steps S11 and S12 of the flowchart illustrated in FIG. 12, and further Steps S22 and S23 are added between Steps S17 and S18 of the flowchart illustrated in FIG. 12. Steps S21, S22, and S23 in FIG. 13 have the same processings as Steps S21, S22, and S23 in FIG. 7 which have been described in the first embodiment. However, when a determination result of Step S23 is "NO", the processing flow returns to Step S32.

It is possible to implement each constituent element of the reception device 2a based on hardware illustrated in FIG. 8 or FIG. 9 as with the reception device 2 according to the first embodiment.

As described above, when the reception device 2a according to the present embodiment receives the (k+1)-th block signal, the reception device 2a first calculates an initial value of a transmission-path estimation value, and demodulates data symbols included in the (k+1)-th block signal by using the calculated initial value. Next, the reception device 2a uses the data symbols obtained by the demodulation to generate a replica of a signal obtained by removing data symbol components from a received signal, and recalculates the transmission-path estimation value on the basis of the static symbol components included in the generated replica. The reception device 2a then uses the recalculated transmission-path estimation value to demodulate data symbols included in the (k+1)-th block signal. Accordingly, the reception device 2a can improve the accuracy in estimating a transmission path.

Third embodiment.

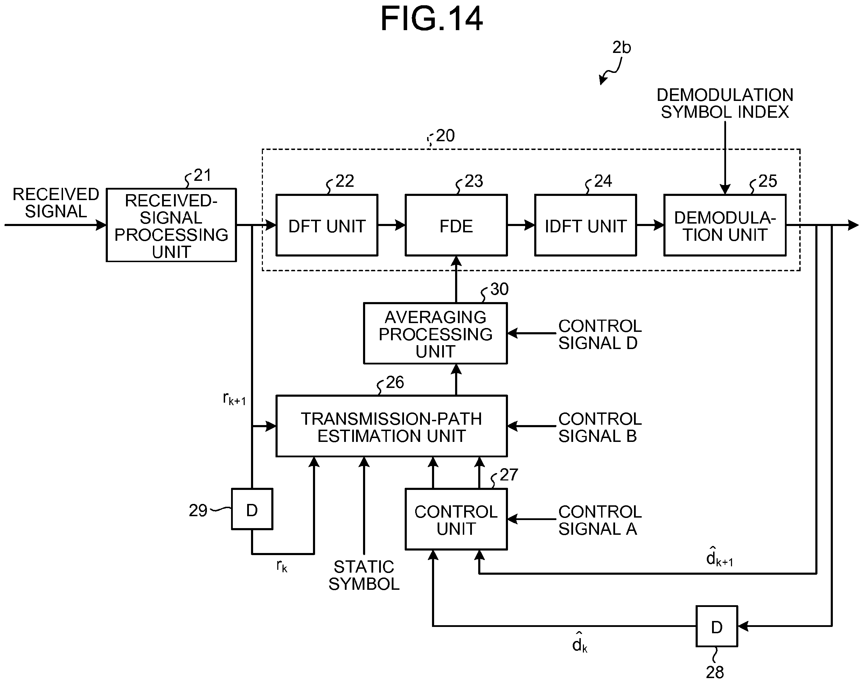

FIG. 14 is a diagram illustrating a configuration example of a reception device according to a third embodiment. A reception device 2b according to the present embodiment has a configuration in which an averaging processing unit 30 is added to the reception device 2 according to the first embodiment.

The transmission-path estimation value calculated by the transmission-path estimation unit 26 and a control signal D are inputted to the averaging processing unit 30. The control signal D is a signal that instructs the averaging processing unit 30 whether to perform averaging processing. When the control signal D instructs the averaging processing unit 30 to perform the averaging processing, the averaging processing unit 30 averages the transmission-path estimation values outputted from the transmission-path estimation unit 26 in a frequency domain. The averaging processing unit 30 holds transmission-path estimation values obtained before and after an averaging processing time k, and then calculates an average value of the transmission-path estimation values held therein to output the average value to the FDE 23. Where the transmission-path estimation value in the frequency domain outputted from the transmission-path estimation unit 26 is represented as **f(bold-faced)**$_{k+1}$, the averaging processing unit 30 performs the averaging processing expressed by the following equation (18) to calculate an average value of the transmission-path estimation values.

[Formula 18]

$$\boldsymbol{f}_{k+1} = \frac{1}{I_1 + I_2}\left(\sum_{i=0}^{I_1-1}\boldsymbol{f}_{k-i} + \sum_{i=1}^{I_2}\boldsymbol{f}_{k+i}\right) \quad \cdots (18)$$

The averaging processing unit 30 averages the transmission-path estimation values between blocks, thereby further improving the accuracy in estimating a transmission path. With this improvement, the demodulation accuracy also improves. In the present embodiment, an example has been described in which the average value of the transmission-path estimation values is calculated in the frequency domain. However, the averaging processing may be performed in a time domain.

The constituent elements of the reception device 2b can be realized by the hardware illustrated in FIGS. 8 and 9 as with the reception device 2 according to the first embodiment.

The configurations described in the above embodiments are intended to show examples of the content of the present invention. The configurations can be combined with other publicly known techniques, and a part of each configuration can be omitted and/or modified without departing from the scope of the present invention.

Reference Signs List

1 transmission device; 2, 2a, 2b reception device; 11 static sequence generation unit; 12 data symbol generation unit; 13 multiplexing unit; 14, 22 DFT unit; 15 interpolation processing unit; 16, 24 IDFT unit; 17 transmission unit; 20 block signal demodulation unit; 21 received-signal processing unit; 23 FDE; 25 demodulation unit; 26, 26a transmission-path estimation unit; 27 control unit; 28, 29 storage unit; 30 averaging processing unit; 51 signal replica generation unit; 52, 63 transmission-path estimation processing unit; 53, 64 time-to-frequency transform unit; 61 data signal generation unit; 62 signal processing unit.

**Claims**

1. A reception device to receive a block signal from a transmission device that generates and transmits the block signal that is a signal having a construction in which a sequence of static symbols is added to a leading part and a trailing part of a sequence of data symbols, the reception device comprising:

   a transmission-path estimation unit to calculate a transmission-path estimation value on the basis of static symbols included in the block signal; and
   a block signal demodulation unit to demodulate the block signal on the basis of the transmission-path estimation value calculated by the transmission-path estimation unit,
   wherein the transmission-path estimation unit calculates an initial value of the transmission-path estimation value on the basis of static symbols included in a first block signal that is a block signal to be demodulated, and recalculates a transmission-path estimation value on the basis of a result obtained by the block signal demodulation unit demodulating data symbols included in the first block signal using the initial value and a result of demodulation of data symbols included in a second block signal that is a block signal having been received immediately-previously to the first block signal, and
   when the transmission-path estimation unit recalculates a transmission-path estimation value, the block signal demodulation unit demodulates the first block signal again using the recalculated transmission-path estimation value.

2. The reception device according to claim 1, wherein the transmission-path estimation unit includes:

   a signal replica generation unit to generate a first replica formed of static symbols and zero symbols when the initial value is calculated, and to generate a second replica formed of static symbols and data symbols when a transmission-path estimation value is recalculated;
   a transmission-path estimation processing unit to calculate the initial value on the basis of the first replica, and recalculate a transmission-path estimation value on the basis of the second replica; and
   a time-to-frequency transform unit to transform a transmission-path estimation value calculated by the transmission-path estimation processing unit to a frequency-domain signal, and
   the signal replica generation unit generates, as the first replica, a signal obtained by replacing data symbols in a block signal generated by the transmission device with zero symbols, and
generates, as the second replica, a signal obtained by replacing data symbols in a block signal generated by the transmission device with data symbols obtained by the block signal demodulation unit demodulating the first block signal using the initial value, and a signal obtained by replacing data symbols in a block signal generated by the transmission device with data symbols obtained by the block signal demodulation unit demodulating the second block signal.

3. The reception device according to claim 2, wherein for processing for generating the first replica, the signal replica generation unit generates a time-domain signal formed of the static symbols and the zero symbols, transforms the time-domain signal to a frequency-domain signal using Fourier transform, performs interpolation processing on the frequency-domain signal, and performs inverse Fourier transform on a signal obtained by the interpolation processing.

4. The reception device according to claim 2 or 3, wherein for processing for generating the second replica, the signal replica generation unit generates a time-domain signal formed of the static symbols and data symbols obtained by demodulating the first block signal, and a time-domain signal formed of the static symbols and data symbols obtained by demodulating the second block signal, transforms each of the time-domain signals to a frequency-domain signal using Fourier transform, performs interpolation processing on each frequency-domain signal, and performs inverse Fourier transform on each signal obtained by the interpolation processing.

5. The reception device according to claim 1, wherein the transmission-path estimation unit includes:

a data signal generation unit to perform signal generation processing to generate a signal obtained by replacing static symbols in a block signal generated by the transmission device with zero symbols and further replacing data symbols with demodulated data symbols obtained by the block signal demodulation unit demodulating the first block signal using the initial value, and another signal obtained by replacing static symbols in a block signal generated by the transmission device with zero symbols and further replacing data symbols with demodulated data symbols obtained by the block signal demodulation unit demodulating the second block signal;
a signal processing unit to generate a signal obtained by removing data symbol components from the first block signal on the basis of a signal generated by the data signal generation unit when a transmission-path estimation value is recalculated;
a transmission-path estimation processing unit to calculate the initial value on the basis of static symbols included in the first block signal, and recalculate a transmission-path estimation value on the basis of the first block signal from which data symbol components have been removed by the signal processing unit; and
a time-to-frequency transform unit to transform a transmission-path estimation value calculated by the transmission-path estimation processing unit to a frequency-domain signal.

6. The reception device according to claim 5, wherein for the signal generation processing, the data signal generation unit generates a time-domain signal obtained by replacing static symbols in a block signal generated by the transmission device with zero symbols and further replacing data symbols with demodulated data symbols obtained by the block signal demodulation unit demodulating the first block signal or the second block signal, performs Fourier transform on the generated time-domain signal to transform the time-domain signal to a frequency-domain signal, performs interpolation processing on the frequency-domain signal, and performs inverse Fourier transform on a signal obtained by the interpolation processing.

7. The reception device according to any one of claims 1 to 6, wherein a step of processing for the transmission-path estimation unit to recalculate a transmission-path estimation value on the basis of a result obtained by the block signal demodulation unit demodulating data symbols included in the first block signal using the initial value, and a result of demodulation of data symbols included in the second block signal, and another step of processing for the block signal demodulation unit to demodulate the first block signal on the basis of the transmission-path estimation value recalculated by the transmission-path estimation unit are performed repeatedly a determined number of times.

8. The reception device according to any one of claims 1 to 7, further comprising an averaging processing unit to calculate an average value of transmission-path estimation values calculated by the transmission-path estimation unit,
wherein the block signal demodulation unit demodulates the block signal on the basis of an average value calculated by the averaging processing unit.

**9.** A communication device comprising the reception device according to any one of claims 1 to 8.

**10.** A demodulation method for demodulating a block signal that is received by a reception device that receives the block signal that is a signal having a construction in which a sequence of static symbols is added to a leading part and a trailing part of a sequence of data symbols, the demodulation method comprising:

an initial value calculating step of calculating an initial value of a transmission-path estimation value on the basis of static symbols included in a first block signal that is a block signal to be demodulated;

a first demodulating step of demodulating data symbols included in the first block signal using the initial value;

a recalculating step of recalculating a transmission-path estimation value on the basis of a result of demodulation by the first demodulating step, and a result of demodulation of data symbols included in a second block signal that is a block signal having been received immediately-previously to the first block signal; and

a second demodulating step of demodulating data symbols included in the first block signal again using a transmission-path estimation value calculated at the recalculating step.

# FIG.1

TRANSMISSION DEVICE  1

RECEPTION DEVICE  2

# FIG.2

1

STATIC SEQUENCE GENERATION UNIT  11

DATA SYMBOL GENERATION UNIT  12

MULTIPLEXING UNIT  13

DFT UNIT  14

INTER-POLATION PROC-ESSING UNIT  15

IDFT UNIT  16

TRANS-MISSION UNIT  17

# FIG.3

k-TH BLOCK: $F_0$ ... $F_{M/2-1}$ — $N_D-M$ DATA SYMBOLS — $F_{M/2}$ ... $F_{M-1}$

(k+1)-TH BLOCK: $F_0$ ... $F_{M/2-1}$ — $N_D-M$ DATA SYMBOLS — $F_{M/2}$ ... $F_{M-1}$

DATA SYMBOL

STATIC SEQUENCE $F_i$

# FIG.4

EP 3 518 481 A1

# FIG.5

# FIG.6

START

INITIALIZE k ~S11

ESTIMATE TRANSMISSION PATH BY USING $r'_{k+1}$ AND p TO CALCULATE $\hat{h}_{k+1}$ ~S12

DEMODULATE DATA SYMBOLS $\hat{d}_{k+1}$ OF (k+1)-TH BLOCK BY USING TRANSMISSION-PATH ESTIMATION VALUE $\hat{h}_{k+1}$ ~S13

GENERATE $Z_k$ BY USING DATA SYMBOLS $\hat{d}_k$ OBTAINED BY DEMODULATION OF k-TH BLOCK AND STATIC SEQUENCE ~S14

GENERATE $Z_{k+1}$ BY USING DATA SYMBOLS $\hat{d}_{k+1}$ OBTAINED BY DEMODULATION OF (k+1)-TH BLOCK AND STATIC SEQUENCE ~S15

PRODUCE $p_{k+1}$ BY USING $Z_k$ AND $Z_{k+1}$ AND ESTIMATE TRANSMISSION PATH BY USING $r'_{k+1}$ TO CALCULATE $\hat{h}_{k+1}$ ~S16

DEMODULATE DATA SYMBOLS $\hat{d}_{k+1}$ OF (k+1)-TH BLOCK BY USING TRANSMISSION-PATH ESTIMATION VALUE $\hat{h}_{k+1}$ ~S17

INCREMENT k ~S18

S19

NO IS k UPPER-LIMIT VALUE?

YES

END

# FIG.7

START

INITIALIZE k ~S11

INITIALIZE NUMBER i OF TIMES OF REPETITION ~S21

ESTIMATE TRANSMISSION PATH BY USING $r'_{k+1}$ AND p TO CALCULATE $\hat{h}_{k+1}$ ~S12

DEMODULATE DATA SYMBOLS $\hat{d}_{k+1}$ OF (k+1)-TH BLOCK BY USING TRANSMISSION-PATH ESTIMATION VALUE $\hat{h}_{k+1}$ ~S13

GENERATE $Z_k$ BY USING DATA SYMBOLS $\hat{d}_k$ OBTAINED BY DEMODULATION OF k-TH BLOCK AND STATIC SEQUENCE ~S14

GENERATE $Z_{k+1}$ BY USING DATA SYMBOLS $\hat{d}_{k+1}$ OBTAINED BY DEMODULATION OF (k+1)-TH BLOCK AND STATIC SEQUENCE ~S15

PRODUCE $p_{k+1}$ BY USING $Z_k$ AND $Z_{k+1}$ AND ESTIMATE TRANSMISSION PATH BY USING $r'_{k+1}$ TO CALCULATE $\hat{h}_{k+1}$ ~S16

DEMODULATE DATA SYMBOLS $\hat{d}_{k+1}$ OF (k+1)-TH BLOCK BY USING TRANSMISSION-PATH ESTIMATION VALUE $\hat{h}_{k+1}$ ~S17

INCREMENT i ~S22

IS i UPPER-LIMIT VALUE? ⌐S23
NO
YES

INCREMENT k ~S18

IS k UPPER-LIMIT VALUE? ⌐S19
NO
YES

END

# FIG.8

200

| 201 | 202 | 203 | 204 |
|---|---|---|---|
| INPUT UNIT | PROCESSOR | MEMORY | OUTPUT UNIT |

# FIG.9

200a

| 201 | 205 | 203 | 204 |
|---|---|---|---|
| INPUT UNIT | PROCESSING CIRCUIT | MEMORY | OUTPUT UNIT |

# FIG.10

# FIG.11

26a TRANSMISSION-PATH ESTIMATION UNIT

64 TIME-TO-FREQUENCY TRANSFORM UNIT

$\hat{h}_{k+1}$

63 TRANSMISSION-PATH ESTIMATION PROCESSING UNIT

62 SIGNAL PROCESSING UNIT

$r_{k+1}$

CONTROL SIGNAL C

61 DATA SIGNAL GENERATION UNIT

STATIC SEQUENCE

$r_k$

$\hat{d}_k$ $\hat{d}_{k+1}$

# FIG.12

START

INITIALIZE k — S11

ESTIMATE TRANSMISSION PATH BY USING $r'_{k+1}$ AND p TO CALCULATE $\hat{h}_{k+1}$ — S12

DEMODULATE DATA SYMBOLS $\hat{d}_{k+1}$ OF (k+1)-TH BLOCK BY USING TRANSMISSION-PATH ESTIMATION VALUE $\hat{h}_{k+1}$ — S13

GENERATE $F_{D,k}$ BY USING DATA SYMBOLS $\hat{d}_k$ OBTAINED BY DEMODULATION OF k-TH BLOCK AND STATIC SEQUENCE — S31

GENERATE $F_{D,k+1}$ BY USING DATA SYMBOLS $\hat{d}_{k+1}$ OBTAINED BY DEMODULATION OF (k+1)-TH BLOCK AND STATIC SEQUENCE — S32

PRODUCE $u_k$ AND $u_{k+1}$ BY USING $F_{D,k}$ AND $F_{D,k+1}$ AND ESTIMATE TRANSMISSION PATH BY USING $r'_{k+1}$ TO CALCULATE $\hat{h}_{k+1}$ — S33

DEMODULATE DATA SYMBOLS $\hat{d}_{k+1}$ OF (k+1)-TH BLOCK BY USING TRANSMISSION-PATH ESTIMATION VALUE $\hat{h}_{k+1}$ — S17

INCREMENT k — S18

NO — IS k UPPER-LIMIT VALUE? — S19

YES

END

# FIG.13

START

INITIALIZE k — S11

INITIALIZE NUMBER i OF TIMES OF REPETITION — S21

ESTIMATE TRANSMISSION PATH BY USING $r'_{k+1}$ AND p TO CALCULATE $\hat{h}_{k+1}$ — S12

DEMODULATE DATA SYMBOLS $\hat{d}_{k+1}$ OF (k+1)-TH BLOCK BY USING TRANSMISSION-PATH ESTIMATION VALUE $\hat{h}_{k+1}$ — S13

GENERATE $F_{D,k}$ BY USING DATA SYMBOLS $\hat{d}_k$ OBTAINED BY DEMODULATION OF k-TH BLOCK AND STATIC SEQUENCE — S31

GENERATE $F_{D,k+1}$ BY USING DATA SYMBOLS $\hat{d}_{k+1}$ OBTAINED BY DEMODULATION OF (k+1)-TH BLOCK AND STATIC SEQUENCE — S32

PRODUCE $u_k$ AND $u_{k+1}$ BY USING $F_{D,k}$ AND $F_{D,k+1}$ AND ESTIMATE TRANSMISSION PATH BY USING $r'_{k+1}$ TO CALCULATE $\hat{h}_{k+1}$ — S33

DEMODULATE DATA SYMBOLS $\hat{d}_{k+1}$ OF (k+1)-TH BLOCK BY USING TRANSMISSION-PATH ESTIMATION VALUE $\hat{h}_{k+1}$ — S17

INCREMENT i — S22

IS i UPPER-LIMIT VALUE? — S23

NO

YES

INCREMENT k — S18

IS k UPPER-LIMIT VALUE? — S19

NO

YES

END

# FIG.14

EP 3 518 481 A1

2b

RECEIVED SIGNAL → RECEIVED-SIGNAL PROCESSING UNIT (21)

20

DFT UNIT (22) → FDE (23) → IDFT UNIT (24) → DEMODULA-TION UNIT (25)

DEMODULATION SYMBOL INDEX → DEMODULA-TION UNIT

AVERAGING PROCESSING UNIT (30) ← CONTROL SIGNAL D

$r_{k+1}$

TRANSMISSION-PATH ESTIMATION UNIT (26) ← CONTROL SIGNAL B

29 — D

$r_k$

STATIC SYMBOL

CONTROL UNIT (27) ← CONTROL SIGNAL A

$\hat{d}_{k+1}$

$\hat{d}_k$ — D — 28

## INTERNATIONAL SEARCH REPORT

| International application No. |
|---|
| PCT/JP2016/080446 |

A. CLASSIFICATION OF SUBJECT MATTER
*H04L27/26*(2006.01)i, *H04L27/01*(2006.01)i

According to International Patent Classification (IPC) or to both national classification and IPC

B. FIELDS SEARCHED

Minimum documentation searched (classification system followed by classification symbols)
H04L27/26, H04L27/01

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)
IEEE Xplore, CiNii

C. DOCUMENTS CONSIDERED TO BE RELEVANT

| Category* | Citation of document, with indication, where appropriate, of the relevant passages | Relevant to claim No. |
|---|---|---|
| A | JP 5832652 B2 (Mitsubishi Electric Corp.), 16 December 2015 (16.12.2015), paragraphs [0037] to [0053]; fig. 5, 6 & WO 2014/024369 A1 | 1-10 |
| A | JP 2001-69118 A (Matsushita Electric Industrial Co., Ltd.), 16 March 2001 (16.03.2001), paragraphs [0025] to [0045]; fig. 1 to 5 & WO 2001/017149 A1    & EP 1209836 A1 paragraphs [0010] to [0031]; fig. 3 to 7 & CN 1370359 A | 1-10 |
| A | JP 2016-154305 A (Mitsubishi Electric Corp.), 25 August 2016 (25.08.2016), (Family: none) | 1-10 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 December 2016 (12.12.16) | 20 December 2016 (20.12.16) |

| Name and mailing address of the ISA/ Japan Patent Office 3-4-3,Kasumigaseki,Chiyoda-ku, Tokyo 100-8915,Japan | Authorized officer |
|---|---|
| | Telephone No. |

Form PCT/ISA/210 (second sheet) (January 2015)

**INTERNATIONAL SEARCH REPORT**

| International application No. |
| --- |
| PCT/JP2016/080446 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2015/019964 A1 (Mitsubishi Electric Corp.), 12 February 2015 (12.02.2015), paragraphs [0044] to [0080]; fig. 12, 16 & US 2016/0182268 A1 paragraphs [0057] to [0072]; fig. 12, 16 & EP 3032767 A1        & CN 105453462 A | 1-10 |
| A | Fumihiro HASEGAWA, Akihiro OKAZAKI, Atsushi OKAMURA, Loic Brunel, David Mother, "Static Sequence Embedded DFT-s-OFDM", IEICE Technical Report, 25 February 2015 (25.02.2015), vol.114, no.490, pages 147 to 152 | 1-10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **N. BENVENUTO ; R. DINIS ; D. FALCONER ; S. TOMASIN.** Single Carrier Modulation With Nonlinear Frequency Domain Equalization: An Idea Whose Time Has Come-Again. *Proceeding of the IEEE,* January 2010, vol. 98 (1), 69-96
- **J. A. C. BINGHAM.** Multicarrier Modulation for Data Transmission: An Idea Whose Time Has Come. *IEEE Commun. Mag.,* May 1990, vol. 28 (5), 5-14
- **HASEGAWA et al.** Static Sequence Embedded DFT-s-OFDM. *IEICE technical report,* March 2015, vol. 14 (490), 147-152
- **B. PORAT.** A Course in Digital Signal Processing. John Wiley and Sons Inc, 1997